# EUROPEAN PATENT APPLICATION

(11) **EP 2 712 059 A1**
(43) Date of publication of application: **26.03.2014**
(21) Application number: 11865694.1
(22) Date of filing: 19.05.2011
(51) Int. Cl.: H02K 1/27

(54) **METHOD FOR MANUFACTURING ROTOR AND CUTTING APPARATUS**

(71) Applicant: TOYOTA JIDOSHA KABUSHIKI KAISHA, Toyota-shi, Aichi-ken, 471-8571 (JP)
(72) Inventor: NISHIKUMA Yasushi, Toyota-shi Aichi 471-8571 (JP); FUKAYA Tetsuyoshi, Toyota-shi Aichi 471-8571 (JP); TATEBE Katsuhiko, Toyota-shi Aichi 471-8571 (JP); FUBUKI Shingo, Toyota-shi Aichi 471-8571 (JP)
(74) Representative: Albutt, Anthony John
(86) International application number: PCT/JP2011/061498
(87) International publication number: WO 2012/157107

(57) **Abstract**

In a method for manufacturing a rotor, a plurality of cut magnet pieces (31, 32) are assembled in a rotor core (10) with both cut surfaces (31a, 32a) of the cut magnet pieces (31),(32) in a engaged state. The production method for the rotor includes a cutting step and a surface treating step. In the cutting step, a magnetic substrate (30A) having a recess (30a) formed in a surface thereof is cut using the recess (30a) as a starting point, thereby forming a first magnet piece (31) and a second magnet piece (32). In the surface treating step, cut surfaces (31a) are surface treated, so as to reduce protrusions (TO) on the cut surfaces (3 1 a) of the first magnet piece (31). Accordingly, the engagement between the cut surfaces (31a, 32a) is poor, the contact area is reduced, and the contact resistance is increased. As a result thereof, the eddy currents in the cut magnets (30) flow less easily, and a loss resulting from the eddy currents may be decreased.

## Description

### TECHNICAL FIELD

The present invention relates to a method for manufacturing a rotor in which a plurality of cleaved magnet pieces are mounted in a rotor body and, more particularly, to a rotor manufacturing method for manufacturing cleaved magnets capable of reducing loss caused by eddy currents. The present invention further relates to a cleaving apparatus for cleaving a magnet workpiece and, more particularly, to a cleaving apparatus capable of reducing loss caused by eddy currents.

### BACKGROUND ART

For a motor, when a large magnet is directly mounted in a rotor body, a magnetic flux generates eddy currents in the magnet. In motors for hybrid vehicles, particularly, the magnetic flux largely varies, thus generating large eddy currents. The eddy currents cause heat generation of a magnet and deterioration in motor performance. Thus, the eddy currents lead to a decrease in fuel efficiency. To reduce the loss caused by the above eddy currents (hereinafter, referred to as "eddy current loss"), conventionally, a large magnet workpiece is split into a plurality of magnet pieces, which are then mounted in a rotor body.

Herein, one example of the conventional art for splitting a magnet workpiece into a plurality of magnet pieces is disclosed as a method for manufacturing a cut magnet in Patent Document 1 listed below. In this manufacturing method, as shown in FIG 18, a magnet workpiece 130A is first cut with a cutting tool to produce a plurality of magnet pieces 131, 132, and 133. Secondly, the surface of each of the magnet pieces 131, 132, and 133 is entirely coated with an insulating coating 140. Finally, the magnet pieces each coated with the insulating coating 140 are joined to each other through adhesive or the like, thereby producing a cut magnet 130.

However, according to the method for manufacturing the cut magnet disclosed in Patent Document 1 listed below, much cut powder or dust is generated during cutting of the magnet workpiece 130A, resulting in waste of the expensive magnet workpiece 130A. The cutting tool is attached with an expensive and consumable diamond tip. Thus, a decrease in yield of the cut magnet 130 and regular replacement of the cutting tool cause a problem that increases a manufacturing cost of the cut magnet 130, that is, a manufacturing cost of a rotor in which the cut magnet 130 is mounted. Further, the step of forming the insulating coating 140 also leads to the high manufacturing cost of the rotor (the cut magnet 130).

To reduce the rotor manufacturing cost, therefore, the present applicant proposed a method for manufacturing a cleaved magnet as disclosed in Patent Document 2 listed below. In this manufacturing method, as shown in FIG 19, firstly, a magnet workpiece (base material) 230A is formed, on its surface, with linear recesses 230a. Secondly, this magnet workpiece 230A is set in a container 250 having protrusions 251. Finally, a cover 260 is pushed down, thereby cleaving the magnet workpiece 230A at each of the recesses 230a as a start point. In this way, a cleaved magnet is produced including a first magnet piece 231, a second magnet piece 232, a third magnet piece 233, and a fourth magnet piece 234.

In the method for manufacturing the cleaved magnet in Patent Document 2 listed below, the magnet workpiece 230A is cleaved, not cut, so that cut powder or dust is hardly generated during cleaving. This can increase the yield of cleaved magnet. Since no cutting tool is used, furthermore, regular replacement of the cutting tool is not necessary. Accordingly, a rotor in which the cleaved magnet is mounted can be reduced in manufacturing cost. Since this cleaved magnet is not formed with the insulating coating, the step of forming the insulating coating is unnecessary, resulting in a reduction in rotor manufacturing costs.

### RELATED ART DOCUMENTS

### PATENT DOCUMENTS

Patent Document 1: JP 2003-134750 A
Patent Document 2: JP 4497198 B

### SUMMARY OF INVENTION

### PROBLEMS TO BE SOLVED BY THE INVENTION

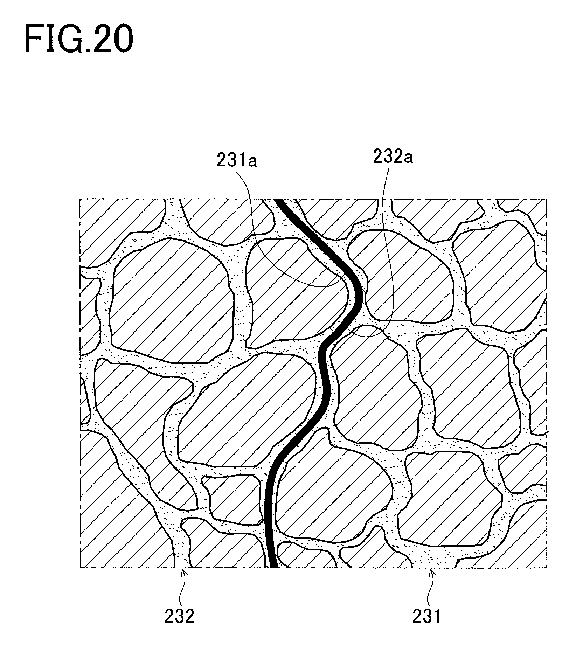

However, the cleaved magnet manufactured by the above manufacturing method in Patent Document 2 has the following problems. Specifically, in a state where a cleaved surface 231 a of the first magnet piece 231 and a cleaved surface 232a of the second magnet piece 232 are in engagement with each other as shown in FIG 20, the cleaved surfaces 231a and 232a are in surface contact relation, thus having a large contact area. In other words, the cleaved surfaces 231a and 232a are closely engaged with each other, so that contact resistance is small, allowing electric currents to easily flow therethrough. Therefore, the first and second magnet pieces 231 and 232 act as a large electrically-integral magnet. This generates large eddy currents and large eddy current loss.

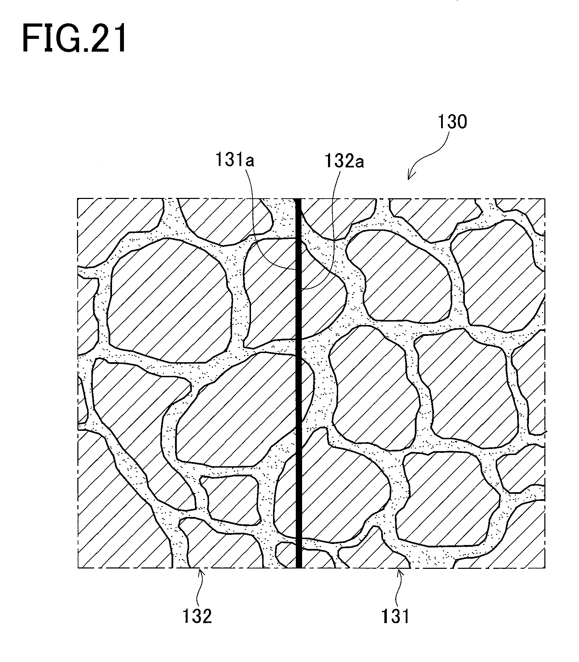

On the other hand, in a definite view of the cut magnet 130 as shown in FIG. 21, a cut surface 131a of the first magnet piece 131 and a cut surface 132a of the second magnet piece 132 are in point contact relation only at several points, thus having a small contact area. In other words, the cut surfaces 131a and 132a are poorly engaged with each other, so that contact resistance is large, thereby making an electric current hard to flow in the cut magnet 130. Thus, eddy current loss is small.

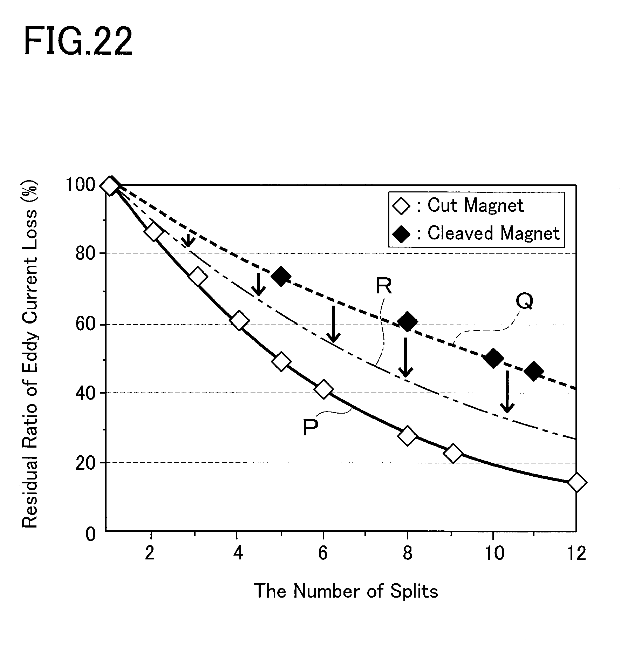

Herein, a difference in eddy current loss between a cleaved magnet and a cut magnet will be explained in detail. FIG 22 is a graph showing a relationship between the number of magnet pieces produced by splitting (hereinafter, referred to as "the number of splits") and a residual ratio of eddy current loss. In FIG 22, a decreasing degree of eddy current loss with respect to the number of splits is plotted by assuming that, in the case where a magnet workpiece is not split, that is, in the case where the number of splits is zero, the residual ratio of eddy current loss is 100%. A solid line P represents the residual ratio of eddy current loss of cut magnets and a broken line Q represents the residual ratio of eddy current loss of cleaved magnets. In the case where the number of splits is eight, for example, the residual ratio of eddy current loss of the cut magnet is about 30%, whereas the residual ratio of eddy current loss of the cleaved magnet is about 60% as shown in FIG 22. This reveals that the cleaved magnet could not reduce the eddy current loss as compared to the cut magnet.

The cut magnet mounted in a rotor can therefore reduce the eddy current loss as explained above; however, the rotor manufacturing cost is increased. On the other hand, the cleaved magnet mounted in a rotor can reduce the rotor manufacturing cost, but the eddy current loss is larger than the cut magnet mounted in the rotor.

The present invention has been made in view of the circumstances to solve the above problems and has a purpose to provide a method for manufacturing a rotor, and a cleaving apparatus, capable of reducing eddy current loss at a low rotor manufacturing cost.

### MEANS OF SOLVING THE PROBLEMS

(1) One aspect of the invention provides a method for manufacturing a rotor in which a plurality of cleaved magnet pieces are mounted in a rotor body, the cleaved magnet pieces having cleaved surfaces engaged with each other, the method including: a cleaving step of cleaving a magnet workpiece formed, on a surface, with a recess serving as a cleaving start point to produce a first magnet piece and a second magnet piece; and a surface processing step of surface-processing at least one cleaved surface selected from a cleaved surface of the first magnet piece and a cleaved surface of the second magnet piece to be engaged with each other to reduce protrusions of the cleaved surface.
(2) In the rotor manufacturing method in the above configuration of the invention, preferably, the surface processing step includes making a sliding member attached to a moving member slid on the cleaved surface while the moving member is moved toward the cleaved surface of the cleaved magnet piece.
(3) In the rotor manufacturing method in the above configuration of the invention, preferably, the sliding member is rotated about an axis to slide in line contact with the cleaved surface.
(4) In the rotor manufacturing method in the above configuration of the invention, preferably, the sliding member is moved in parallel to the cleaved surface to slide in surface contact with the cleaved surface.
(5) In the rotor manufacturing method in the above configuration of the invention, preferably, the surface processing step includes vibrating at least one of the first magnet piece and the second magnet piece by use of a vibrating device while the cleaved surface of the first magnet piece and the cleaved surface of the second magnet piece are engaged with each other.
(6) In the rotor manufacturing method in the above configuration of the invention, preferably, the surface processing step includes placing the cleaved surface of the first magnet piece and the cleaved surface of the second magnet piece in contact with each other so that the cleaved surfaces are pressed against each other in a direction perpendicular to the cleaved surfaces.
(7) A second aspect of the invention provides a cleaving apparatus including: a fixed part for clamping a magnet workpiece; and a movable part for clamping the magnet workpiece, the movable part being movable with respect to the fixed part, the movable part being moved with respect to the fixed part while the fixed part and the movable part clamp the magnet workpiece to cleave the magnet workpiece formed with a recess serving as a cleaving start point to produce a first magnet piece and a second magnet piece, wherein the cleaving apparatus further includes a surface processing means for surface-processing at least one cleaved surface selected from a cleaved surface of the first magnet piece and a cleaved surface of the second magnet piece to be engaged with each other so that protrusions of the cleaved surface are reduced.
(8) In the cleaving apparatus in the above configuration of the invention, preferably, the surface processing means includes: a moving member movable toward the cleaved surface of the cleaved magnet piece; and a sliding member attached to the moving member, the sliding member being slidable on the cleaved surface.
(9) In the cleaving apparatus in the above configuration of the invention, preferably, the sliding member is a rotary sliding member configured to rotate about an axis and slide in line contact with the cleaved surface.
(10) In the cleaving apparatus in the above configuration of the invention, preferably, the sliding member is a planar sliding member configured to move in parallel to the cleaved surface and slide in surface contact with the cleaved surface.
(11) In the cleaving apparatus in the above configuration of the invention, preferably, the surface processing means includes: a spacer for disabling or permitting movement of the movable part with respect to the fixed part in one direction parallel to the cleaved surface; and a vibrating device for vibrating at least one of the movable part and the fixed part while the movable part is permitted by the spacer to move with respect to the fixed part and a cleaved surface of the first magnet piece and a cleaved surface of the second magnet piece are engaged with each other.

### EFFECTS OF THE INVENTION

Operations and advantages of the aforementioned rotor manufacturing method will be explained.

In the above manufacturing method (1), in the cleaving step, the magnet workpiece is cleaved, not cut away, hardly generating cut powder or dust during cleaving. Thus, the cleaved magnets can be produced with a good yield. Further, any cutting tool does not need to be used. The cleaved magnets are not formed with any insulating coating or film and thus a step of forming the insulating coating or film is unnecessary. Accordingly, when those cleaved magnets are mounted in a rotor body, a manufacturing cost of a rotor can be reduced. In the surface processing step, the cleaved surface is processed, thereby reducing protrusions of the cleaved surface. This diminishes engagement between the cleaved surfaces. Thus, their engaging portions provide a large contact resistance, making electric currents hard to flow therethrough. This makes eddy currents hard to flow in the cleaved magnets, resulting in small eddy current loss.

In the above methods (2), (3), and (4), in the surface processing step, the moving member is moved toward the cleaved surface of the magnet piece and the sliding member is slid on the cleaved surface so that the protrusions of the cleaved surface are appropriately ground or chipped away. This can reliably reduce the engagement between the cleaved surfaces.

In the above method (5), in the surface processing step, the vibrating device is operated to vibrate at least one of the first magnet piece and the second magnet piece to make the engaged cleaved surfaces process each other. This does not need to use the sliding member which slides on the cleaved surface and also perform regular replacement of the sliding member. Accordingly, the manufacturing cost of the rotor (cleaved magnets) can be reduced.

In the above method (6), in the surface processing step, the cleaved surfaces are pressed against each other in the direction perpendicular to the cleaved surfaces for mutual surface processing of the cleaved surfaces without needing any additional constituting member. Accordingly, the manufacturing cost of the rotor (cleaved magnets) can be reduced.

Operations and advantages of the aforementioned cleaving apparatus will be explained.

In the above configuration (7), the surface processing means processes the cleaved surface to reduce the protrusions of the cleaved surface. This diminishes the engagement between the cleaved surfaces. In respective engaging portions, accordingly, the contact resistance is large and the electric current is hard to flow. Accordingly, eddy currents are less likely to flow in the cleaved magnets, resulting in small eddy current. In addition, the cleaving apparatus is configured by adding the surface processing means to a conventional cleaving apparatus to surface process the cleaved surfaces. The surface processing means is requested only to slightly process the cleaved surface for a short time and thus is configured with no complex structure and at relatively low cost. The cost increase for the cleaving apparatus is small as compared to the conventional cleaving apparatus. The rotor manufacturing cost can be reduced as compared to the conventional cutting apparatus.

In the above configurations (8), (9), and (10), when the cleaved surface is to be surface-processed, the moving member is moved toward the cleaved surface of the cleaved magnet piece and the sliding member is slid on the cleaved surface. This can appropriately grind or chip away the protrusions of the cleaved surface, thereby reliably diminishing the engagement of the cleaved surfaces.

In the above configuration (11), when the cleaved surface is to be processed, the movable part is permitted by the spacer to move with respect to the fixed part. At least one of the first magnet piece and the second magnet piece is vibrated by the vibrating device, thereby causing the engaged cleaved surfaces to process each other. This configuration does not need to use the sliding member which slides on the cleaved surface and to perform replacement of the sliding member at regular intervals. According to this cleaving apparatus, the manufacturing cost of the rotor (cleaved magnets) can be reduced.

### BRIEF DESCRIPTION OF THE DRAWINGS

FIG 1 is a plan view of a rotor;
FIG 2 is an enlarged view of three magnet pieces shown in FIG 1;
FIG 3 is a schematic view of a whole cleaving apparatus in a first embodiment;
FIG 4 is an enlarged end view of a magnet workpiece and others shown in FIG 3;
FIG 5 is a view showing a state where the magnet workpiece shown in FIG 3 is cleaved;
FIG 6 is a configuration view of a surface processing means seen in an X direction in FIG 5;
FIG 7 is a view showing a state where a grind stone shown in FIG 5 is slid on a first magnet piece;
FIG 8 is a view seen in a Y direction in FIG. 7;
FIG 9 are schematic diagrams showing (A) a state of cleaved surfaces immediately after cleaved, (B) a state of a cleaved surface before subjected to surface processing; (C) a state of the cleaved surface after surface-processed, and (D) a state of the cleaved surfaces are engaged with each other;
FIG. 10 is a view of a first modified example corresponding to FIG 8;
FIG 11 is a schematic view of a whole cleaving apparatus in a second embodiment;
FIG 12 is a cross sectional view taken along a line Z-Z in FIG 11;
FIG 13 is a view showing a state cleaved surfaces shown in FIG 11 are engaged with each other;
FIG 14 is a view showing a state where a vibration device shown in FIG 12 vibrates a central wall;
FIG 15 is a schematic view of a whole cleaving apparatus in a third embodiment;
FIG 16 is a view showing a state where a magnet workpiece shown in FIG 15 is cleaved;
FIG 17 is a view showing a state where cleaved surfaces shown in FIG 16 are pressed against each other;

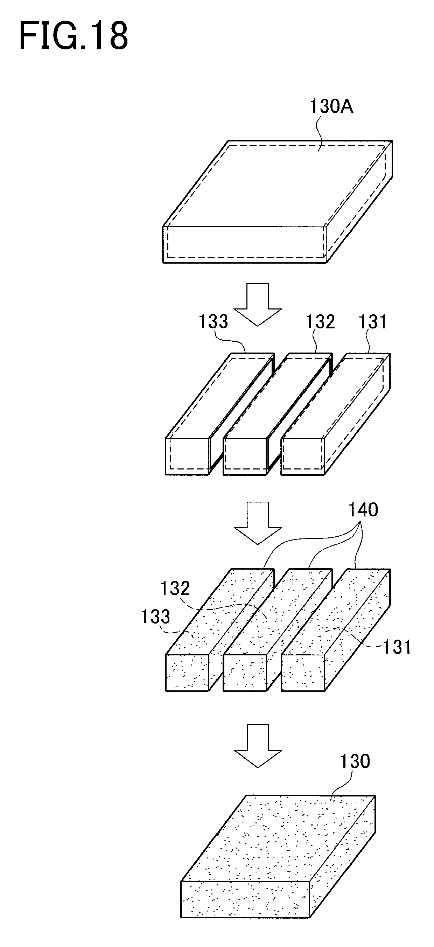

FIG 18 is a view showing a step of manufacturing a conventional cut magnet;

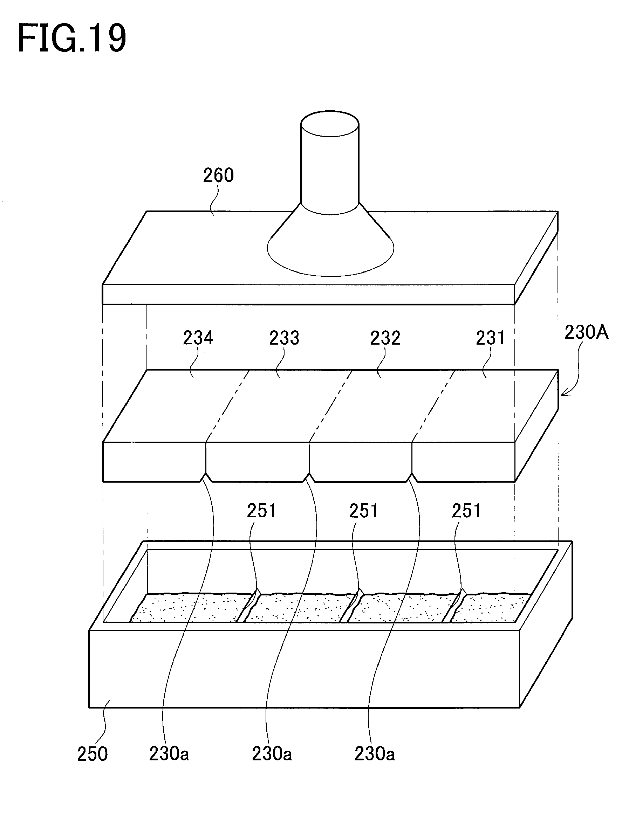

FIG 19 is a view showing a state where a conventional magnet workpiece is cleaved;
FIG 20 is a diagram showing a state where cleaved surfaces of cleaved magnets are engaged with each other;
FIG 21 is a diagram showing a state where cut surfaces of cut magnets are engaged with each other; and
FIG 22 is a graph showing a relationship between the number of magnet pieces produced by splitting and a residual ratio of eddy current loss.

### MODE FOR CARRYING OUT THE INVENTION

### <First Embodiment>

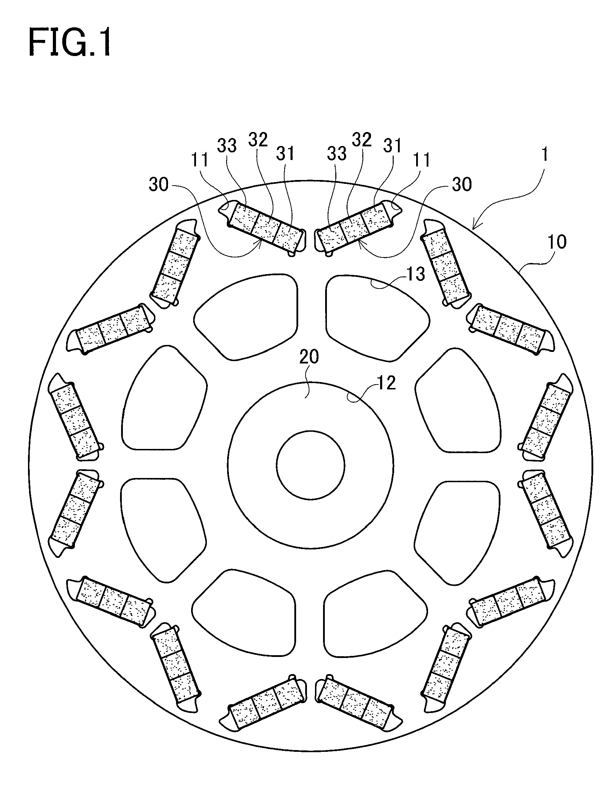

A detailed description of an embodiment of a method for manufacturing a rotor and a cleaving apparatus according to the present invention will now be given referring to the accompanying drawings. FIG 1 is a plan view of a rotor 1. This rotor 1 is as shown in FIG 1 provided with a rotor core 10 which is a rotor body, a rotor shaft 20, and cleaved magnets 30.

The rotor core 10 consists of a plurality of annular electromagnetic steel plates stacked in layers. This rotor core 10 is formed, as shown in FIG 1, with a plurality of slots 11 arranged in an outer circumferential section in a radial direction, a central hole 12 at a shaft axis, and a plurality of cutout holes 13 in a middle section in the radial direction.

Each of the slots 11 is designed to receive the cleaved magnets 30 and axially formed through the rotor core 10. The slots 11 are arranged in pairs each oriented like a V shape in plan view and at equal intervals in a circumferential direction of the rotor core 10. The central hole 12 is used to receive the rotor shaft 20. Each of the cutout holes 13 serves to reduce stress that will be generated in the rotor core 10.

The rotor shaft 20 functions as a rotating shaft of the rotor 1. This rotor shaft 20 has a cylindrical shape and is press-fitted in the central hole 12 of the rotor core 10. Accordingly, the cutout holes 13 absorb the stress generated in the rotor core 10 by press-fitting of the rotor shaft 20. Specifically, the cutout holes 13 prevent large stress from acting on the cleaved magnets 30 mounted in the slots 11.

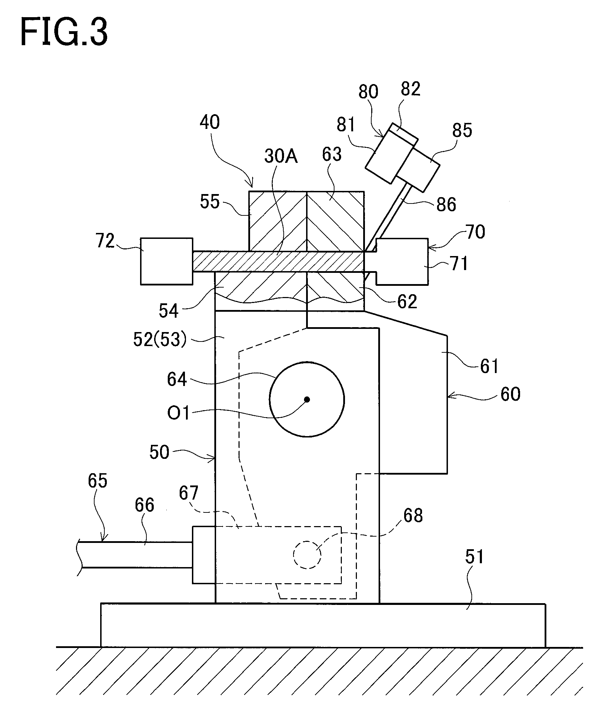

The cleaved magnets 30 will generate a magnetic field (magnetic flux) by interaction with a rotating magnetic field generated in coils of a stator not shown, thereby making the rotor 1 rotate. Each of the cleaved magnets 30 consists of a first magnet piece 31, a second magnet piece 32, and a third magnet piece 33 each of which is a cleaved part. These three magnet pieces 31, 32, and 33 are produced by splitting one magnet workpiece 30A (see FIG 3) into three parts. The cleaved magnets 30 are permanent magnets, selected from sintered magnets such as rare-earth magnets, ferrite magnets, and alnico magnets. Each cleaved magnet 30 has a length of about 21 mm, a width of about 27 mm, and a thickness of about 6.3 mm. The kinds of cleaved magnets, each size of each cleaved magnet 30, and the number of splits of each magnet workpiece 30A may be changed as needed.

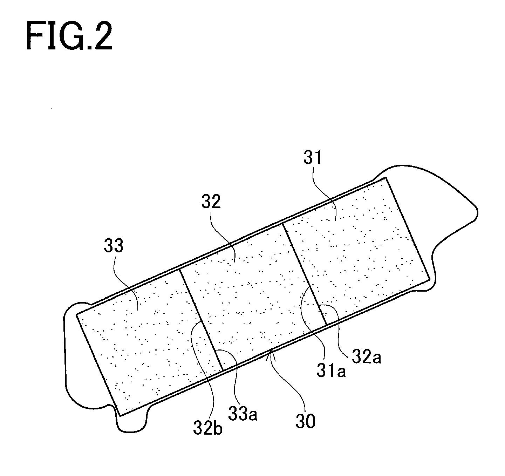

FIG 2 is an enlarged view of the three magnet pieces 31, 32, and 33 shown in FIG 1. In the first magnet piece 31 and the second magnet piece 32, their cleaved surfaces 31a and 32a formed by cleaving are engaged with each other. In the second magnet piece 32 and the third magnet piece 33, their cleaved surfaces 32b and 33a formed by cleaving are engaged with each other. The magnet pieces 31, 32, and 33 are fixed with adhesive or the like in each slot 11. In this rotor 1, accordingly, the loss caused by eddy currents (hereinafter, referred to as "eddy current loss") is reduced as compared to the case where a signal magnet workpiece 30Ais mounted in each slot 11.

A cleaving apparatus 40 for cleaving the magnet workpiece 30A will be explained below referring to FIG 3. FIG 3 is a schematic view of the whole cleaving apparatus 40. This cleaving apparatus 40 is provided, as shown in FIG 3, with a fixed part 50, a movable part 60, and a positioning mechanism 70. FIG 3 also illustrates a longitudinal cross section of a part of the fixed part 50 and a part of the movable part 60, and the magnet workpiece 30A.

The fixed part 50 is not moved while the magnet workpiece 30A is cleaved by the cleaving apparatus 50. This fixed part 50 includes a base 51, a pair of side walls 52 and 53 extending upward from the base 51, and a fixed lower clamp 54 and a fixed upper clamp 55 placed above the side walls 52 and 53.

The base 51 has a rectangular parallelepiped shape long in a horizontal direction to support the side walls 52 and 53. These side walls 52 and 53 each have a nearly parallelepiped rectangular shape long in a vertical direction. The side wall 52 is placed on a near side on the paper sheet of FIG 3 and the side wall 53 is placed on a far side on the paper sheet of FIG 3. Specifically, the side wall 52 and the side wall 53 are apart at a predetermined distance in a direction perpendicular to the paper sheet of FIG. 3.

The fixed lower clamp 54 and the fixed upper clamp 55 are operated to clamp the magnet workpiece 30A from above and below. Thus, a left part of the magnet workpiece 30A in FIG 3 is retained against movement between the lower clamp 54 and the upper clamp 55. These lower clamp 54 and upper clamp 55 are configured to adjust a clamping force to clamp the magnet workpiece 30A from above and below. This clamping force is adjusted to 3 to 4 kN to clamp the magnet workpiece 30A when it is cleaved.

The movable part 60 is rotated with respect to the fixed part 50 when the cleaving apparatus 50 cleaves the magnet workpiece 30A. The movable part 60 includes a central wall 61, a movable lower clamp 62 and a movable upper clamp 63 placed above the central wall 61, a rotary shaft 64 extending in a direction perpendicular to the paper sheet of FIG 3, and an actuator 65.

The central wall 61 is placed between the side walls 52 and 53 and has a nearly L-like shape in side view. The movable lower clamp 62 and the movable upper clamp 63 are operated to clamp the magnet workpiece 30A from above and below. Thus, a right part of the magnet workpiece 30A in FIG 3 is retained against movement between the lower clamp 62 and the upper clamp 63. These lower clamp 62 and upper clamp 63 are configured to adjust a clamping force to clamp the magnet workpiece 30A from above and below. This clamping force is adjusted to 3 to 4 kN to clamp the magnet workpiece 30A when it is cleaved.

The rotary shaft 64 is a shaft operative to rotate the central wall 61 about a shaft axis O1. This rotary shaft 64 is placed passing through the side wall 52, the central wall 61, and the side wall 53 in a perpendicular direction to the paper sheet of FIG 3. The actuator 65 is used to rotate the central wall 61, the movable lower clamp 62, and the movable upper clamp 63. The actuator 65 includes a rod 66, and a connecting part 67 attached to an end of the rod 66. The rod 66 and the connecting part 67 are movable in right and left directions in FIG 3.

The connecting part 67 is connected to a lower end of the central wall 61 through a support pin 68 extending in the perpendicular direction to the paper sheet of FIG 3. When the actuator 65 is activated, the central wall 61, movable lower clamp 62, and movable upper clamp 63 are rotated about a rotation center O1. The lower clamp 62 and the upper clamp 63 are attached to the central wall 61 through a member or members not illustrated so that the clamps 62 and 63 are rotated integrally with the central wall 61.

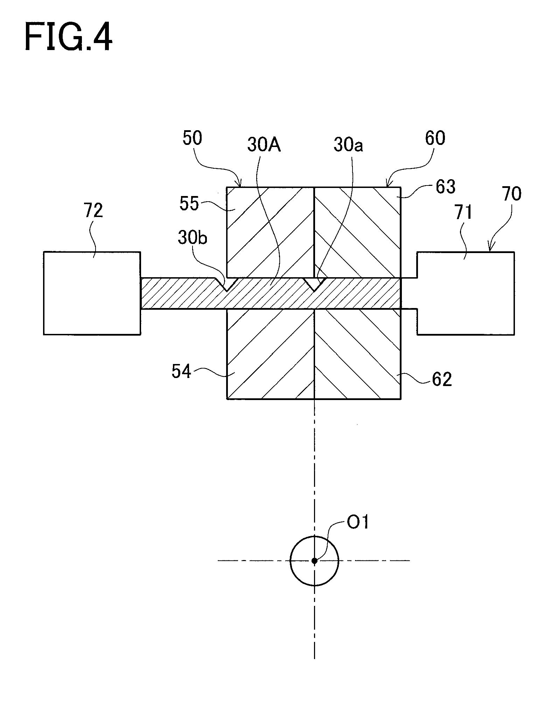

FIG 4 is an enlarged end view of the magnet workpiece 30A and others shown in FIG 3. As shown in FIG 4, the surface of the magnet workpiece 30A is formed with two linear recesses 30a and 30b. Those recesses 30a and 30b are formed by a laser beam, for example. The recesses 30a and 30b may also be formed by cutting using wire cut electric spark or a grind stone. Each of the recesses 30a and 30b is a small cutout having a width of about 0.1 mm and a depth of about 0.05 mm. In FIG 4, the recesses 30a and 30b are illustrated with exaggerated sizes.

The positioning mechanism 70 is used to accurately determine the position of the magnet workpiece 30A to be cleaved. This positioning mechanism 70 includes a first positioning member 71 on a movable part 60 side and a second positioning member 72 on a fixed part 50 side as shown in FIG 4. The first positioning member 71 is placed in contact with a right end face of the magnet workpiece 30A and the second positioning member 72 is placed in contact with a left end face of the magnet workpiece 30A.

The positioning mechanism 70 is configured to move the first and second positioning members 71 and 72 in right and left directions in FIG 4 by an actuator not shown. In this manner, the magnet workpiece 30A is positioned in place so that the recess 30a as a cleavage start point is located just above the shaft axis O1. The first positioning member 71 is configured to rotate integrally with the movable lower clamp 62 and the movable upper clamp 63 when the magnet workpiece 30A is cleaved.

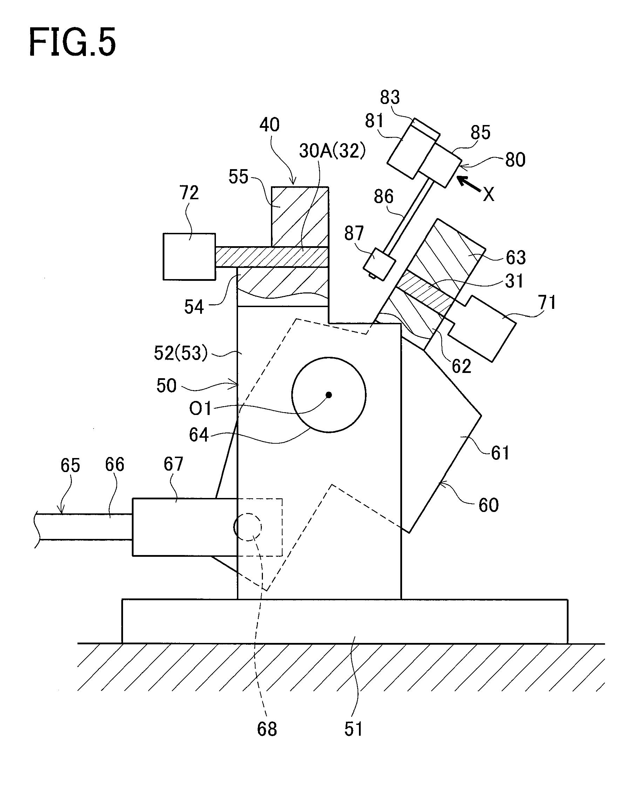

Cleaving operations of the cleaving apparatus 40 will be explained below referring to FIG 5. FIG 5 illustrates a state where the magnet workpiece 30A shown in FIG 3 is cleaved. Firstly, while the left part of the magnet workpiece 30A in FIG 3 is clamped between the fixed lower clamp 54 and the fixed upper clamp 55 and the right part of the magnet workpiece 30A in FIG 3 is clamped between the movable lower clamp 62 and the movable upper clamp 63, the actuator 65 is activated.

The rod 66 and the connecting part 67 are thus moved leftward in FIG 3, thereby rotating clockwise the central wall 61, lower clamp 62, and upper clamp 63 about the shaft axis O1. Thereby, as shown in FIG 5, the magnet workpiece 30A is cleaved at the recess 30a (see FIG 4) as a start point, producing the first magnet piece 31 and the second magnet piece 32 (a remaining magnet workpiece 30A). The remaining magnet workpiece 30A is then similarly cleaved at the recess 30b (see FIG 4) as a start point, producing the second magnet piece 32 and the third magnet piece 33.

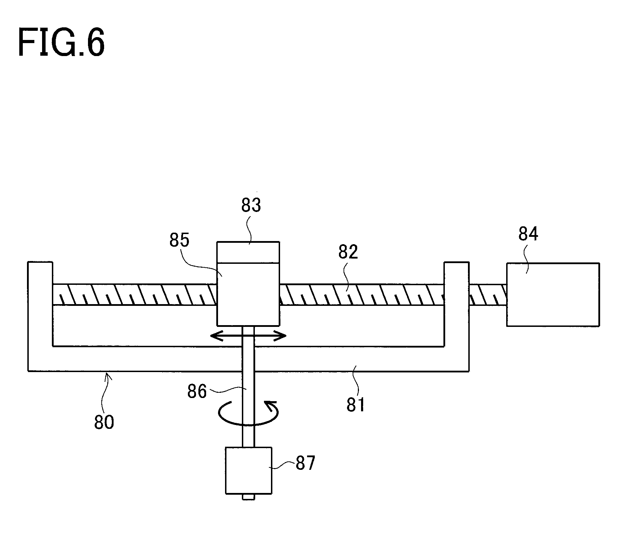

Meanwhile, as shown in FIGs. 3 and 5, the cleaving apparatus 40 is provided with a surface processing means 80 for surface-processing the cleaved surface 31 a of the first magnet piece 31. FIG 6 is a configuration view of the surface processing means 80 seen from an X direction in FIG 5. The surface processing means 80 includes, as shown in FIG 6, a support base 81, a ball screw 82, a ball screw nut 83 serving as a moving member, a servo motor 84, a rotary motor 85, a motor shaft 86, and a grind stone 87 as a rotary sliding member.

The support base 81 supports the ball screw 82 rotatably. The ball screw 82 and the ball screw nut 83 are engaged through a ball not illustrated. As the ball screw 82 is rotated, accordingly, the ball screw nut 83 is moved in the right or left direction in FIG 6. The servo motor 84 is used to rotate the ball screw 82. The rotary motor 85 is used to rotate the motor shaft 86. This rotary motor 85 is fixed to the ball screw nut 83 and thus is movable in the right or left direction integral with the ball screw nut 83. The rotary motor 85 is placed on a nearer side on the paper sheet of FIG 6 than the ball screw nut 83.

The rotary shaft 86 extends in a vertical direction in FIG 6 and is integrally attached with a grind stone 87 at a lower end. Thus, the ball screw nut 83, rotary motor 85, motor shaft 86, and grind stone 87 are allowed to integrally move toward the cleaved surface 31 a of the cleaved first magnet piece 31. The grind stone 87 is slid on the cleaved surface 31 a of the first magnet piece 31 to perform surface processing. This grind stone 87 has a columnar shape and is slide while rotating around the motor shaft 86 so that a peripheral surface of the grind stone 87 is in line contact with the cleaved surface 31a of the first magnet piece 31. Operations and advantages of the surface processing means 80 will be explained in detail later.

Next, a method for manufacturing the cleaved magnets 30 in the present embodiment will be explained. As shown in FIG 5, first, the magnet workpiece 30A is cleaved at the recess 30a (see FIG 4) as a start point (a cleaving step in the invention). Accordingly, the magnet workpiece 30A is split into the first magnet piece 31 and a remaining magnet workpiece 30A (the second magnet piece 32). The remaining magnet workpiece 30A is thereafter split into the second magnet piece 32 and the third magnet piece 33. Herein, the remaining magnet workpiece 30A is referred to as the second magnet piece 32 for convenience of explanation.

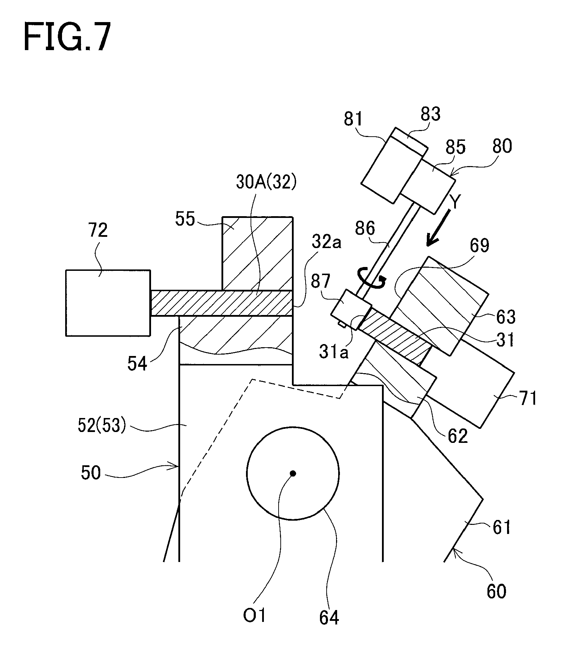

After the first magnet piece 31 is produced by cleaving, the positioning member 71 is moved leftward in FIG 5. Thus, as shown in FIG 7, the cleaved surface 31a of the first magnet piece 31 is made to slightly protrude from the end face 69 of the movable lower clamp 62 and the movable upper clamp 63. The servo motor 84 (see FIG 6) is then activated to move the ball screw nut 83, the rotary motor 85, rotary shaft 86, and grind stone 87 together to the near side on the paper sheet of FIG. 7 so that the grind stone 87 comes into contact with the cleaved surface 31 of the first magnet piece 31. At that time, the grind stone 87 is rotating by activation of the rotary motor 85. FIG 7 illustrates a state where the grind stone 87 shown in FIG 5 is sliding on the cleaved surface 31a of the first magnet piece 31.

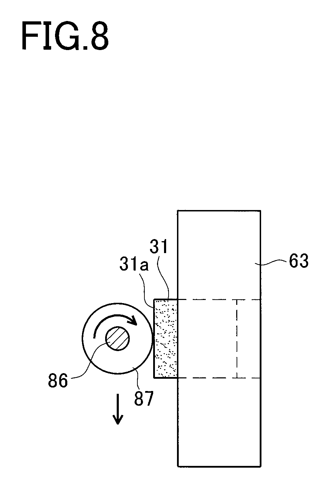

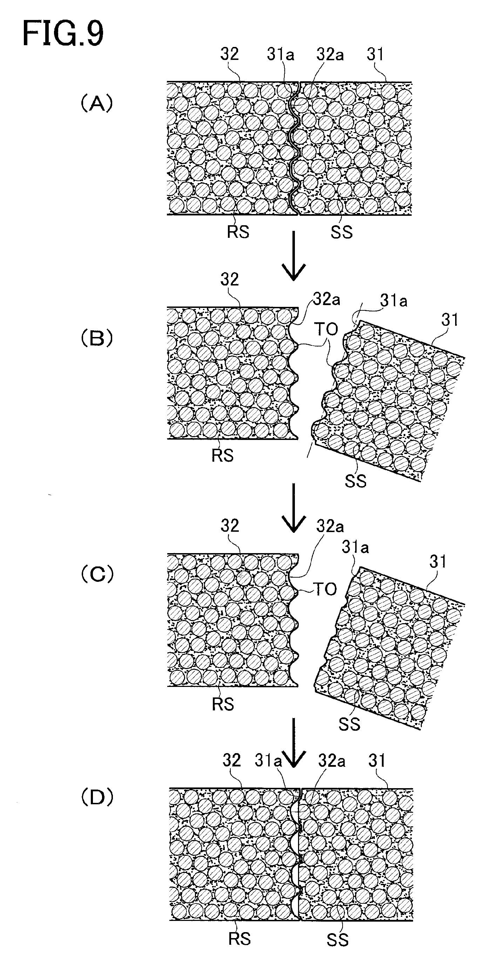

FIG 8 is a view seen from a Y direction in FIG 7. As shown in FIG 8, the grind stone 87 is rotating and moving downward in FIG 8, thereby surface-processing the cleaved surface 31a of the first magnet piece 31 (a surface processing step in the invention). Herein, the state of the cleaved surface 31a of the first magnet piece 31 and the cleaved surface 32a of the second magnet piece 32 (the remaining magnet workpiece 30A) are explained below referring to FIG 9.

FIG 9 (A) is a schematic diagram showing the state of the cleaved surfaces 31a and 32a just after cleaved. As shown in FIG 9 (A), in cleavage, main phases SS are not broken but grain boundary phases RS are broken. FIG 9 (B) is a schematic diagram showing the state of the cleaved surface 31a before subjecting to the surface processing. As shown in FIG 9 (B), the cleaved surface 31a is to be surface-processed in a position indicated by an imaginary line by the grind stone 87.

FIG 9 (C) is a schematic diagram showing the state of the cleaved surface 31a after subjecting to the surface processing. As shown in FIG 9 (C), protrusions TO of the cleaved surface 31a (see FIG 9 (B)) are ground away and reduced by the surface processing. FIG 9 (D) is a schematic diagram showing the state where the cleaved surfaces 31a and 32a are engaged with each other when the first and second magnet pieces 31 and 32 are mounted in the slot 11. As shown in FIG 9 (D), the cleaved surfaces 31a and 32a are in reduced engagement with each other with slight gaps generated in their engaging portions.

Herein, an explanation is given to the advantages of the cleaved surface 31a subjected to the surface processing, i.e., the advantages of the surface processing means 80. If the cleaved surfaces 31a and 32a not subjected to the surface processing are mated as shown in FIG 9 (A), they are well engaged with each other and with a large contact area. In other words, the contact resistance is small, allowing electric currents to easily flow. Accordingly, when the first magnet piece 31 and the second magnet 32 which are just cleaved, the first and second magnet pieces 31 and 32 form an electrically-integral large magnet, which will generate large eddy currents. This causes large eddy current loss.

On the other hand, when the cleaved surface 31a subjected to the surface processing and the cleaved surface 32a are meshed as shown in FIG 9 (D), they are in poor, or diminished, engagement with a small contact area. In other words, the contact resistance is large, making electric currents hard to flow. Accordingly, when the first magnet piece 31 having been surface-processed and the second magnet piece 32 are mounted in the rotor 1, the eddy currents are less likely to flow in the first and second magnet pieces 31 and 32. This results in small eddy current loss.

In this cleaving apparatus 40, after the cleaved surface 31a of the first magnet piece 31 is surface-processed, the remaining magnet workpiece 30A is placed in position by the positioning mechanism 70 and then is split into the second magnet piece 32 and the third magnet piece 33 by cleaving. Thereafter, the cleaved surface 32b of the second magnet piece 32 (see FIG 2) is surface-processed by the surface processing means 80 in a similar manner as in the surface processing of the cleaved surface 31a of the first magnet piece 31. Therefore, the surface-processed cleaved surface 32b can provide the same effects as the surface-processed cleaved surface 31a.

Operations and advantages of the rotor manufacturing method in the present embodiment are explained below. In this manufacturing method, in the cleaving step, the magnet workpiece 30A is first cleaved at the recess 30a as a start point as shown in FIG 5 to form the first magnet piece 31. In the surface processing step, as shown in FIG 7, the cleaved surface 31a of the first magnet piece 31 is surface-processed by the rotating grind stone 87. Thus, the protrusions TO (see FIG 9 (C)) of the cleaved surface 31a are reduced. Successively, the remaining magnet workpiece 30A is cleaved at the recess 30b as a start point to produce the second magnet piece 32 and the third magnet piece 33. The cleaved surface 32a of the second magnet piece 32 is surface-processed by the rotating grind stone 87. Thereafter, as shown in FIG 2, the cleaved magnets 30, in each of which the cleaved surfaces 31a and 32a are engaged with each other and the cleaved surfaces 32b and 33a are engaged with each other, are mounted in the slots 11 of the rotor core 10. Thus, the rotor 1 is completed.

According to the rotor 1, therefore, as shown in FIG 9 (D), the cleaved surfaces 31a and 32a are in diminished engagement relation and the cleaved surfaces 32b and 33a are in diminished engagement relation. In respective engaging portions, accordingly, the contact resistance is large and the electric current is hard to flow. This manufacturing method thus makes the eddy currents hard to flow in the cleaved magnets 30 and reduces the eddy current loss.

The above effect of reducing eddy current loss will be explained referring to FIG 22. FIG 22 is a graph showing a relationship between the number of splits and the residual ratio of eddy current loss as explained in the Problems to be solved by the Invention. In FIG 22, a two-dot chain line R represents the residual ratio of eddy current loss in the case of cleaved magnets having been subjected to the surface processing. As shown in FIG 22, under the condition of the same number of splits, the surface-processed cleaved magnets could reduce the eddy current loss (the residual ratio of eddy current loss) as compared with the cleaved magnets (broken line Q) not subjected to the surface processing. As the number of times the cleaved surface is subjected to the surface processing is increased, the cleaved surfaces are more poorly engaged, so that the two-dot chain line R moves downward and approaches the solid line P. Specifically, the residual ratio of eddy current loss in the case of the surface-processed cleaved magnets becomes close to the residual ratio of eddy current loss of cut magnets.

According to the above rotor manufacturing method, the magnet workpiece 30A is cleaved, not cut away, hardly generating cut powder or dust during cleaving. Thus, the cleaved magnets 30 can be produced with a good yield. Further, the cutting tool does not need to be used. The cleaved magnets are not formed with any insulating coating and thus the step of forming the insulating coating is unnecessary. Since those cleaved magnets 30 are mounted in the rotor core 10, the manufacturing cost of the rotor 1 can be reduced. The cleaved surfaces 31a and 32a of the first and second magnet pieces 31 and 32 have only to be thinly surface-processed for about 2 to 3 seconds. Thus, the grind stone 87 for surface processing is more inexpensive than the cutting tool attached with a diamond tip and only needs regular replacement with less number of times.

Concrete costs are explained by comparison. The method for manufacturing the cut magnets in Patent Document 1 (JP 2003-134750A) listed above needs a cutting step, an insulating material applying step, and a drying step (an insulating coating forming step). This method needs a depreciation cost of about JPY 30 per motor. Furthermore, the insulating coating is epoxy coating or enamel coating capable of ensuring heat resistance. The insulating material requires a material cost of about JPY 20 to 30 per motor. Thus, a total cost is about JPY 50 to 60 per motor. On the other hand, the present embodiment needs the cleaving step and the surface processing step, which are achieved by simply adding the surface processing means 80 to a conventional cleaving apparatus. Thus, the present embodiment merely needs a depreciation cost of about JPY 25 per motor. Consequently, the depreciation cost can be reduced by about JPY 25 to 35 per motor as compared with the manufacturing method of the cut magnets in the aforementioned Patent Document 1.

According to the above rotor manufacturing method, when the cleaved surface 31a of the first magnet piece 31 is to be surface processed, the ball screw nut 83 and others are moved toward the cleaved surface 31 a, and then the rotating grind stone 87 is slid on the cleaved surface 31a. Therefore, as shown in FIG 9 (C), the protrusion(s) TO of the cleaved surface 31a is/are accurately ground away. This can surely provide reduced engagement between the cleaved surfaces 31a and 32a.

Operations and advantages of the cleaving apparatus of the present embodiment will be explained below. According to this cleaving apparatus 40, after the magnet workpiece 30A is cleaved, the surface processing means 80 is operated to process the cleaved surface 31a of the first magnet piece 31. Accordingly, the protrusions TO (see FIG 9 (C)) of the cleaved surface 31a are reduced. Thereafter, the surface processing means 80 is similarly operated to process the cleaved surface 32b of the second magnet piece 32 to reduce protrusions of the cleaved surface 32b.

Therefore, as shown in FIG 9 (D), the engagement between the cleaved surfaces 31a and 32a can be diminished and the engagement between the cleaved surfaces 32b and 33a can be diminished. In their engaging portions, accordingly, the contact resistance is large, making the electric currents hard to flow. According to this cleaving apparatus 40, as above, the eddy current is hard to flow in the cleaved magnets 30 and the eddy current loss can be reduced.

The cleaving apparatus 40 is configured by adding the surface processing means 80 to the conventional cleaving apparatus to perform the surface processing of the cleaved surfaces 31a and 32a of the first and second cleaved surfaces 31 and 32. Since the surface processing means 80 is required only to thinly process the cleaved surfaces 31a and 32a for about 2 to 3 seconds, this means is configured at relatively low cost, not in complex structure. The cost increase for this cleaving apparatus 40 is small as compared to the conventional cleaving apparatus. In other words, the cleaving apparatus itself can reduce the cost for manufacturing a rotor as compared to the cutting device and thus the cleaving apparatus 40 of the present embodiment with a reduced cost increase can reduce the cost for manufacturing the rotor 1.

According to the above cleaving apparatus 40, when the cleaved surface 31a of the first magnet piece 31 is to be processed, the ball screw nut 83 and others are moved toward the cleaved surface 31a, and then the grind stone 87 being rotated is slid on the cleaved surface 31a. As shown in FIG 9 (C), the protrusions TO of the cleaved surface 3 1 a are accurately ground away. This can reliably diminish the engagement between the cleaved surfaces 31a and 32a.

### <Modified Example of First Embodiment>

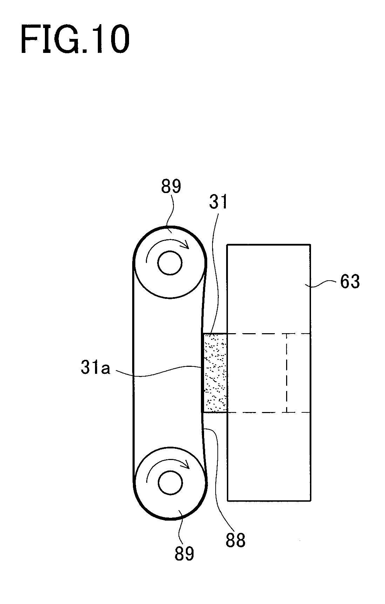

A modified example of the aforementioned first embodiment will be explained referring to FIG 10. FIG 10 is a view of the modified example, corresponding to FIG 8. In the present example, as shown in FIG 10, a belt member 88 as a planar sliding member is wound around two rollers 89 and is rotated in association with rotation of the rollers 89. This belt member 88 is for example a ring-shaped file. This belt member 88 is moved in parallel to the cleaved surface 31a of the first magnet piece 31 and is slid in surface contact with the cleaved surface 31a. Other structures of the modified example are identical to those of the aforementioned first embodiment and thus their explanations are omitted.

According to this modified example, as shown in FIG 10, the rotating belt member 88 is slid in surface contact with and along the entire cleaved surface 31a of the first magnet piece 31. This prompts a decrease in the protrusions TO of the cleaved surface 31a as compared to the case where the rotating grind stone 87 is slid in line contact with the cleaved surface 31a (see FIG 8). In other words, it is possible to reduce the protrusions TO of the cleaved surface 31a with a smaller grinding amount than in the above first embodiment. Other operations and advantages of the modified example are identical to those of the aforementioned first embodiment and thus their explanations are omitted.

### <Second Embodiment>

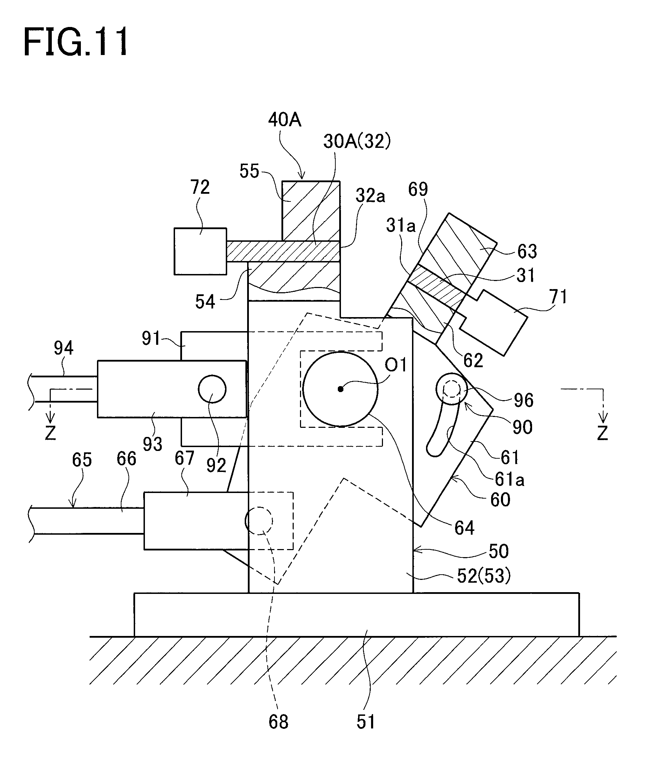

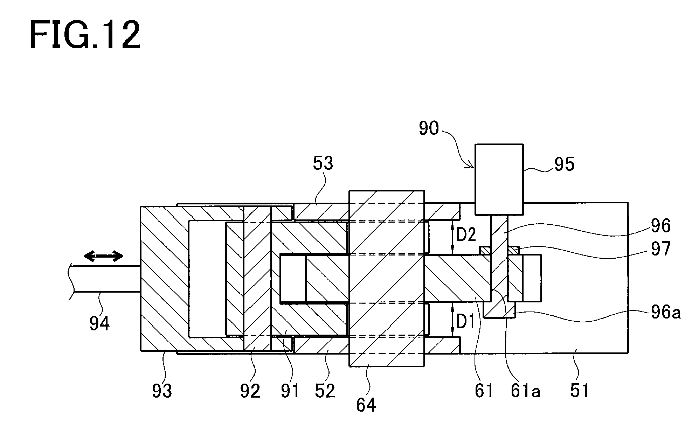

A second embodiment will be explained below referring to FIGs. 11 to 14. FIG 11 is a schematic structural view of a whole cleaving apparatus 40A of the second embodiment. FIG 11 illustrates a state where the magnet workpiece 30A is already split into the first magnet piece 31 and the second magnet piece 32. This cleaving apparatus 40A is provided with a surface processing means 90 as shown in FIG 11. FIG 12 is a cross sectional view taken along a line Z-Z in FIG 11.

The surface processing means 90 includes, as shown in FIG 12, a spacer 91, a connecting pin 92, a holder member 93, an actuator 94, a vibrating device 95, a connecting pin 96, and a nut 97. The spacer 91 restricts or permits movement of the central wall 61 with respect to the side walls 52 and 53 in the axial direction of the rotary shaft 64 (hereinafter, simply referred to as the "axial direction"). In FIG 12, the spacer 91 blocks up a clearance D1 between the side wall 52 and the central wall 61 and also blocks up a clearance D2 between the side wall 53 and the central wall 61. In this state, the central wall 61 (the movable part 60) is disabled to move in the axial direction with respect to the side walls 52 and 53. Herein, the axial direction of the rotary shaft 64 is one direction extending in parallel to the cleaved surfaces 31a and 32a.

The holder member 93 supports the spacer 91. This holder member 93 holds the spacer 91 through the connecting pin 92 and is connected to the actuator 94. The actuator 94 is configured to move the holder member 93, the connecting pin 92, and the spacer 91 in the right and left directions in FIG 12. Accordingly, when the actuator 94 is activated from the state shown in FIG 12, the holder member 93, connecting pin 92, and spacer 91 are moved leftward in FIG 12, leaving the clearances D1 and D2 free from the spacer 91. On the other hand, when the actuator 94 is activated again from that state, the holder member 93, connecting pin 92, and spacer 91 are moved rightward in FIG 12, making the spacer 91 block up the clearances D1 and D2.

The vibrating device 95 is configured to vibrate the central wall 61 (the movable part 60) in the axial direction. This vibrating device 95 can vibrate the slide pin 96 in the axial direction. The slide pin 96 is inserted through an escape hole 61a of the central wall 61. A distal end 96a of the slide pin 96 and a nut 97 fixed to the slide pin 96 are engaged with the central wall 61. Thus, the slide pin 96 and the central wall 61 can be vibrated integrally in the axial direction. Other structures of the second embodiment are identical to those of the first embodiment and their explanations are omitted.

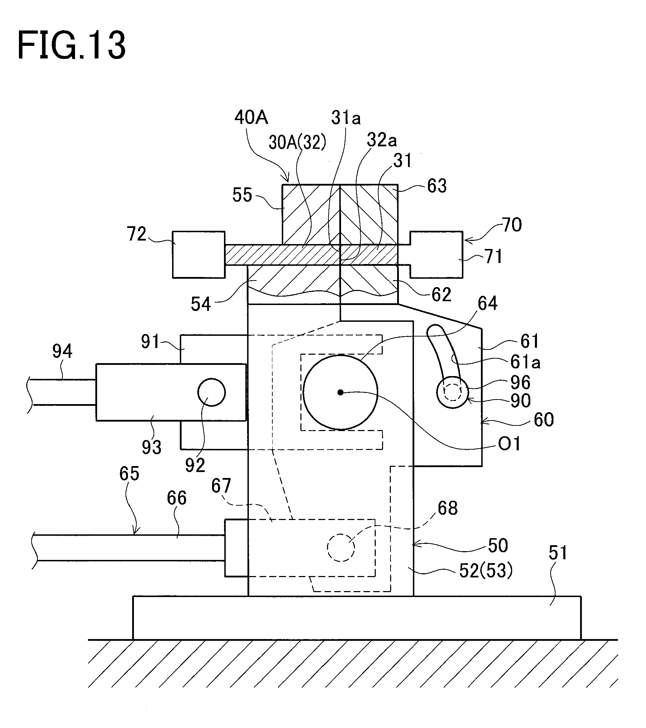

Next, an explanation is given to a surface-processing step of the cleaved surface 31a of the first magnet piece 31 in the second embodiment. As shown in FIG 11, firstly, the magnet workpiece 30A is cleaved, producing the first magnet piece 31 and the second magnet piece 32. The actuator 65 is then activated to move the rod 66 and the connecting part 67 rightward in FIG 11, thereby rotating counterclockwise the central wall 61, movable lower clamp 62, and movable upper clamp 63 about the shaft axis O1. This brings the cleaved surface 31a of the first magnet piece 31 in engagement with the cleaved surface 32a of the second magnet piece 32 as shown in FIG 13.

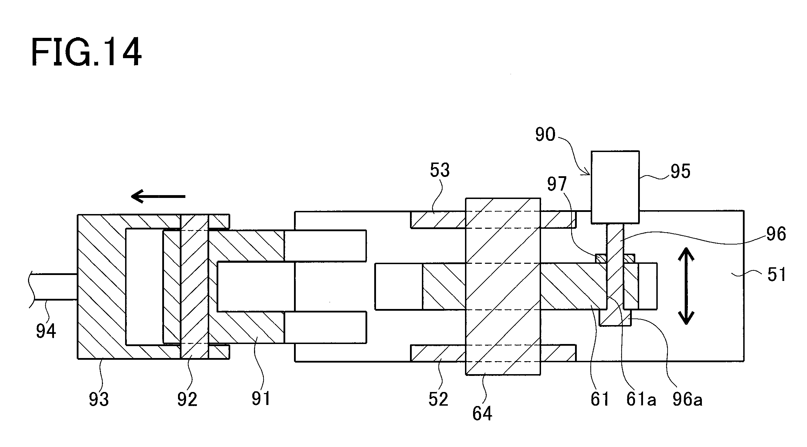

Successively, as shown in FIG 14, the actuator 94 is activated to move the holder member 93, connecting pin 92, and spacer 91 leftward in FIG 14, removing the spacer 91 from the clearances D1 and D2. Then, the vibrating device 95 is activated to vibrate the slide pin 96 and the central wall 61 (the movable part 60) in the axial direction. Accordingly, the engaged cleaved surfaces 31a and 32a are surface-processed by each other and thus the protrusions TO are reduced from both the cleaved surfaces 31 and 32a. Thereafter, similarly, the second magnet piece 32 and the third magnet piece are produced from the magnet workpiece 30A and further the cleaved surface 32b of the second magnet piece 32 and the cleaved surface 33a of the third magnet piece 33 are subjected to the surface processing.

Operations and advantages of the rotor manufacturing method of the second embodiment will be explained. In the surface processing step, the vibrating device 95 is operated to vibrate the central wall 61 (the movable part 60), thereby causing mutual surface processing of the engaged cleaved surfaces 31a and 32a. Since this cleaved surface 31a is not processed by the grind stone 87 used in the first embodiment, there is no need to use such a sliding member as the grind stone 87 and further to replace the sliding member at regular intervals. According to the manufacturing method, as above, the manufacturing cost of the rotor 1 (cleaved magnets 30) can be reduced as compared to the manufacturing method of the first embodiment.

Since the engaged cleaved surfaces 31a and 32a are surface-processed by each other, the protrusions TO of the cleaved surface 32a as well as the protrusions TO of the cleaved surface 31a are reduced. This manufacturing method can therefore diminish the engagement between the cleaved surfaces 31a and 32a and reduce the eddy current loss as compared to the case where only the cleaved surface 31a is subjected to the surface processing.

Operations and advantages of the cleaving apparatus of the second embodiment will be explained below. The surface processing means 90 of the cleaving apparatus 40A causes the engaged cleaved surfaces 31a and 32a to surface process each other. This does not need to use the sliding member which slides on the cleaved surface 31a and to perform regular replacement of the sliding member. Thus, the cleaving apparatus 40A can reduce the manufacturing cost of the rotor 1 (cleaved magnets 30) as compared to the cleaving apparatus 40 of the first embodiment.

In the first embodiment, as shown in FIG 7, after the first magnet piece 31 is released from a clamped state, the positioning member 71 is moved to slightly protrude the cleaved surface 31 a from the end face 69 of the movable lower clamp 62 and the movable upper clamp 63. In the second embodiment, in contrast, the first magnet piece 31 does not need to be released from the clamped state and the positioning member 71 does not need to be moved as shown in FIG 13. This configuration is superior to the first embodiment. In the second embodiment, therefore, the apparatus can be simply configured and easily operated as compared to the first embodiment. This first embodiment requires only a depreciation cost of about JPY 15 per motor. Other operations and advantages of the second embodiment are identical to those of the first embodiment and their explanations are omitted.

### <Third Embodiment>

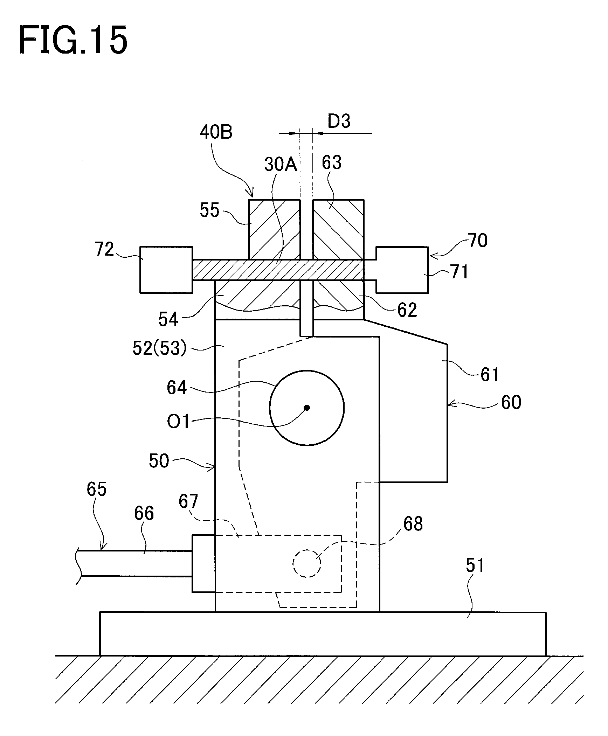

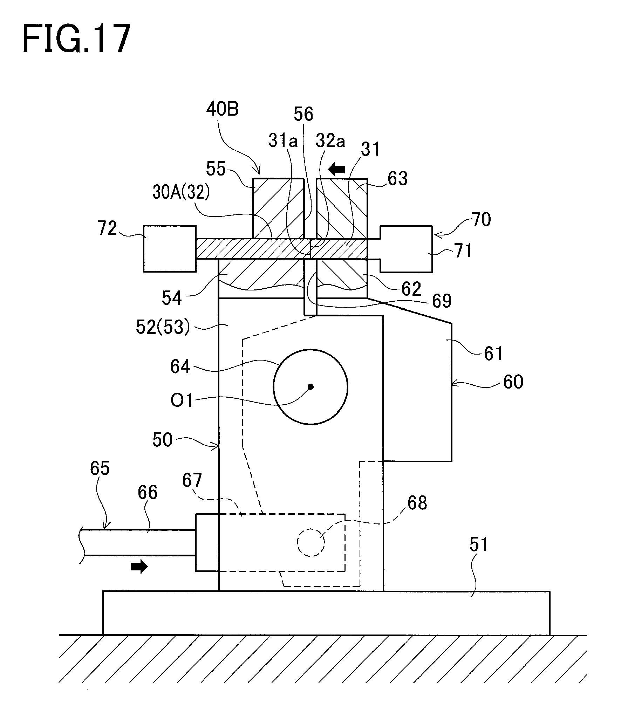

A third embodiment will be explained referring to FIGs. 15 to 17. FIG 15 is a schematic structural view of a whole cleaving apparatus 40B in the third embodiment. FIG 15 shows a state where the magnet workpiece 30A is not cleaved yet. This cleaving apparatus 40B is not provided with the surface processing means 80 and 90 of the first and second embodiments.

As shown in FIG 15, the cleaving apparatus 40B is configured to provide a clearance D3 between a set of the fixed lower clamp 54 and the fixed upper clamp 55 and a set of the movable lower clamp 62 and the movable upper clamp 63 in a direction to cleave the magnet workpiece 30A (in a right-and-left direction in FIG 15). Other configurations of the third embodiment are identical to those of the first and second embodiments and their explanations are omitted.

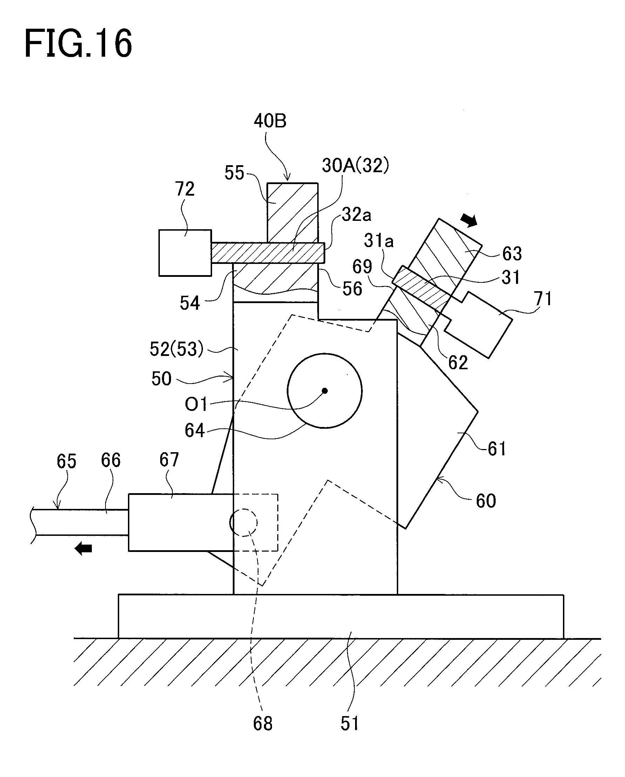

Next, an explanation is given to a surface-processing step of the cleaved surface 31a of the first magnet piece 31 in the third embodiment. As shown in FIG 16, firstly, the magnet workpiece 30A is cleaved, producing the first magnet piece 31 and the second magnet piece 32. At that time, the first magnet piece 31 is kept clamped by the movable lower clamp 62 and the movable upper clamp 63, and the cleaved surface 31a of the first magnet piece 31 slightly protrudes from the end face of the lower clamp 62 and upper clamp 63. Similarly, the second magnet piece 32 is kept clamped by the fixed lower clamp 54 and the fixed upper clamp 55, and the cleaved surface 32a of the second magnet piece 32 slightly protrudes from the end face 56 of the fixed lower clamp 54 and the fixed upper clamp 55.

Thereafter, the actuator 65 is activated to quickly rotate the central wall 61, movable lower clamp 62, movable upper clamp 63 counterclockwise about the shaft axis O1. This swiftly presses the cleaved surface 31a of the first magnet piece 31 against the cleaved surface 32a of the second magnet piece in a direction perpendicular to the cleaved surfaces 31a and 32a. At that time, since the clearance D3 has been provided before the magnet workpiece 30A is cleaved, the movable lower clamp 62 and the movable upper clamp 63 do not contact with the fixed lower clamp 54 and the fixed upper clamp 55.

Consequently, the protrusions TO of the cleaved surfaces 31a and 32a are chipped off by collision. In this way, the protrusions TO of both the cleaved surfaces 31a and 32a are reduced, so that the cleaved surfaces 31a and 32a are surface-processed by each other. Thereafter, similarly, the second magnet piece 32 and the third magnet piece 33 are produced from the magnet workpiece 30A, and the cleaved surface 32b of the magnet piece 32 and the cleaved surface 33a of the third magnet piece 33 are surface-processed by each other.

Operations and advantages of the rotor manufacturing method of the third embodiment will be explained. According to this manufacturing method, the cleaved surfaces 31a and 32a can be surface-processed without needing any additional constituent member (the surface processing means 80 and 90 of the first and second embodiments). This makes it possible to reduce the manufacturing cost of the cleaved magnets 30 (the rotor 1) as compared to the manufacturing methods of the first and second embodiments.

Operations and advantages of the cleaving apparatus of the third embodiment will be explained below. This cleaving apparatus 40B can be produced from an existing cleaving apparatus simply changed to provide the clearance D3 in the fixed part and the movable part. The cleaving apparatus 40B therefore can reduce the manufacturing cost of the rotor 1 (the cleaved magnets 30) as compared with the cleaving apparatuses 40 and 40A of the first and second embodiments including the surface processing means 80 and 90. Other operations and advantages of the third embodiment are identical to those of the first and second embodiments and thus their explanations are omitted.

The rotor manufacturing method and the cleaving apparatus according to the present invention are explained above but the present invention is not limited thereto. The present invention may be embodied in other specific forms without departing from the essential characteristics thereof. In the first embodiment, the surface processing means 80 is used to perform the surface processing of the cleaved surface 31a of the first magnet piece 31. Furthermore, the surface processing means may also be used to perform the surface processing of the cleaved surface 32a of the second magnet piece 32 in addition to the cleaved surface 31a of the first magnet piece 31.

In the second embodiment, the vibrating device 95 is provided in the movable part 60 to vibrate the central wall 61 (the movable part 60) for mutual surface processing of the engaged cleaved surfaces 31a and 32a. Alternatively, a vibrating device may be provided in the fixed part 50 to vibrate for example the fixed lower clamp 54 and the fixed upper clamp 55 for mutual surface processing of the engaged cleaved surfaces 31a and 32a. Further, vibrating devices also may be provided in both the movable part 60 and the fixed part 50.

In the third embodiment, the clearance D3 is provided in the cleaving apparatus 40B as shown in FIG 15, allowing the cleaved surface 31 a of the first magnet piece 31 to slightly protrude from the end face 69 of the movable lower clamp 62 and the movable upper clamp 63 and allowing the cleaved surface 32a of the second magnet piece 32 to slightly protrude from the end face 56 of the fixed lower clamp 54 and the fixed upper clamp 55. An alternative is to move the first positioning member 71 and the second positioning member 72 after the magnet workpiece 30A is cleaved to allow the cleaved surface 31a of the first magnet piece 31 to slightly protrude from the end face 69 and allow the cleaved surface 32a of the second magnet piece 32 to slightly protrude from the end face 56.

In each of the embodiments, the movable part 60 is rotated with respect to the fixed part 50 to cleave the magnet workpiece 30A. Alternatively, the movable part may be moved in one direction with respect to the fixed part to cleave the magnet workpiece 30A.

In each of the embodiments, the rotor 1 is manufactured such that the magnet pieces 31, 32, and 33 are arranged in a planar direction of the rotor core 10 while the cleaved surfaces 31a and 32a are engaged with each other and the cleaved surfaces 32b and 33a are engaged with each other as shown in FIG 1. As an alternative, a rotor may be manufactured such that the magnet pieces 31, 32, and 33 are arranged in the axial direction of the rotor core 10 while the cleaved surfaces 31a and 32a are engaged with each other and the cleaved surfaces 32b and 33a are engaged with each other.

### REFERENCE SIGNS LIST

- 1: Rotor
- 10: Rotor core
- 30: Cleaved magnet
- 30A: Magnet workpiece
- 30a, 30b: Recess
- 31: First magnet piece
- 32: Second magnet piece
- 33: Third magnet piece
- 31a, 32a: Cleaved surface
- 32b, 33a: Cleaved surface
- 40, 40A, 40B: Cleaving apparatus
- 50: Fixed part
- 54: Fixed lower clamp
- 55: Fixed upper clamp
- 60: Movable part
- 62: Movable lower clamp
- 63: Movable upper clamp
- 70: Positioning mechanism
- 80, 90: Surface processing means
- 83: Ball screw nut
- 86: Motor shaft
- 87: Grind stone
- 88: Belt member
- 91: Spacer
- 95: Vibrating device
- TO: Protrusion

## Claims

1. A method for manufacturing a rotor in which a plurality of cleaved magnet pieces are mounted in a rotor body, the cleaved magnet pieces having cleaved surfaces engaged with each other, the method including:
a cleaving step of cleaving a magnet workpiece formed, on a surface, with a recess serving as a cleaving start point to produce a first magnet piece and a second magnet piece; and
a surface processing step of surface-processing at least one cleaved surface selected from a cleaved surface of the first magnet piece and a cleaved surface of the second magnet piece to be engaged with each other to reduce protrusions of the cleaved surface.

2. The method for manufacturing a rotor according to claim 1, wherein the surface processing step includes making a sliding member attached to a moving member slid on the cleaved surface while the moving member is moved toward the cleaved surface of the cleaved magnet piece.

3. The method for manufacturing a rotor according to claim 2, wherein the sliding member is rotated about an axis to slide in line contact with the cleaved surface.

4. The method for manufacturing a rotor according to claim 2, wherein the sliding member is moved in parallel to the cleaved surface to slide in surface contact with the cleaved surface.

5. The method for manufacturing a rotor according to claim 1, wherein the surface processing step includes vibrating at least one of the first magnet piece and the second magnet piece by use of a vibrating device while the cleaved surface of the first magnet piece and the cleaved surface of the second magnet piece are engaged with each other.

6. The method for manufacturing a rotor according to claim 1, wherein the surface processing step includes placing the cleaved surface of the first magnet piece and the cleaved surface of the second magnet piece in contact with each other so that the cleaved surfaces are pressed against each other in a direction perpendicular to the cleaved surfaces.

7. A cleaving apparatus including:
a fixed part for clamping a magnet workpiece; and
a movable part for clamping the magnet workpiece, the movable part being movable with respect to the fixed part,
the movable part being moved with respect to the fixed part while the fixed part and the movable part clamp the magnet workpiece to cleave the magnet workpiece formed with a recess serving as a cleaving start point to produce a first magnet piece and a second magnet piece,
wherein the cleaving apparatus further includes a surface processing means for surface-processing at least one cleaved surface selected from a cleaved surface of the first magnet piece and a cleaved surface of the second magnet piece to be engaged with each other so that protrusions of the cleaved surface are reduced.

8. The cleaving apparatus according to claim 7, wherein the surface processing means includes:
a moving member movable toward the cleaved surface of the cleaved magnet piece; and
a sliding member attached to the moving member, the sliding member being slidable on the cleaved surface.

9. The cleaving apparatus according to claim 8, wherein the sliding member is a rotary sliding member configured to rotate about an axis and slide in line contact with the cleaved surface.

10. The cleaving apparatus according to claim 8, wherein the sliding member is a planar sliding member configured to move in parallel to the cleaved surface and slide in surface contact with the cleaved surface.

11. The cleaving apparatus according to claim 7, wherein the surface processing means includes:
a spacer for disabling or permitting movement of the movable part with respect to the fixed part in one direction parallel to the cleaved surface; and
a vibrating device for vibrating at least one of the movable part and the fixed part while the movable part is permitted by the spacer to move with respect to the fixed part and a cleaved surface of the first magnet piece and a cleaved surface of the second magnet piece are engaged with each other.
